# EUROPÄISCHE PATENTSCHRIFT

(11) **EP 2 961 884 B1**
(45) Veröffentlichungstag und Bekanntmachung des Hinweises auf die Patenterteilung: **30.11.2016**
(21) Anmeldenummer: 14712556.1
(22) Anmeldetag: 18.02.2014
(51) Int. Cl.: D21C 11/00

(54) **VERFAHREN ZUR KAUSTIFIZIERUNG VON GRÜNLAUGE**
PROCESS FOR RECAUSTICIZING GREEN LIQUOR
PROCÉDÉ DE CAUSTIFICATION DE LIQUEUR VERTE

(30) Priorität: 26.02.2013 AT 1482013
(43) Veröffentlichungstag der Anmeldung: 06.01.2016
(73) Patentinhaber: Mondi AG, 1030 Wien (AT)
(72) Erfinder: RÜF, Walter, A-9400 Wolfsberg (AT); HACKER, Manfred, A-9462 Bad St. Leonhard (AT); RAFFALT, Stefan, A-9413 St. Gertraud (AT)
(74) Vertreter: Cunow, Gerda
(86) Internationale Anmeldenummer: PCT/AT2014/000034
(87) Internationale Veröffentlichungsnummer: WO 2014/131067

(56) Entgegenhaltungen:
- WO-A1-85/01966
- WO-A1-94/01617
- WO-A1-95/21291
- WO-A1-97/22752
- WO-A1-2005/116329
- WO-A1-2012/027223
- WO-A2-2005/056917
- US-A- 2 552 183
- US-A- 2 841 561
- US-A- 4 561 934

## Beschreibung

Die vorliegende Erfindung bezieht sich auf ein Verfahren zur Kaustifizierung von Grünlauge im Sulfat- oder Kraftprozess zur Zellstoffherstellung, bei welchem eine aus einer wässrigen Lösung von Natriumcarbonat als Hauptbestandteil und Natriumsulfid bestehende Grünlauge in einem Slaker mit Calciumoxid versetzt wird und einer Umsetzung in einem Kaustifizierer zu einer wässrigen Suspension enthaltend Natriumhydroxid und Calciumcarbonat als Hauptbestandteile unterworfen wird, welche Suspension auf einem ersten Filter abfiltriert wird und anschließend zwei bis drei Mal nach Verdünnung mit Wasser in einem Verdünnungsbehälter zur Abtrennung von darin suspendierten Feststoffen über weitere Filter geleitet und filtriert wird.

Bei der Zellstoffherstellung in einem Sulfat- oder Kraftprozess wird ein zellstoffhaltiger Faserstoff in einer Natronlauge und Natriumsulfid enthaltenden Lösung, der sogenannten Weißlauge aufgeschlossen. Dieser Aufschluss ergibt einen Zellstoffbrei und als Nebenprodukt wird die sogenannte Schwarzlauge erhalten. Bei einem Rückgewinnungsverfahren der Nebenprodukte in dem Kraftprozess werden nicht umgesetzte Chemikalien oder Reaktionsprodukte und insbesondere die wiederverwertbaren Bestandteile der Schwarzlauge rückgewonnen und bei der Zellstoffherstellung wieder eingesetzt. Hierzu wird zunächst die Schwarzlauge durch Eindampfen konzentriert und anschließend verbrannt, um eine sogenannte Schmelze herzustellen. Die Schmelze wird aufgelöst und eine Grünlauge erhalten, welche Grünlauge als Hauptbestandteile Natriumcarbonat und Natriumsulfid enthält. Die Grünlauge wird in der Folge mit gebranntem Kalk bzw. Calciumoxid umgesetzt, um in einer sogenannten Kaustifizierungsreaktion das Natriumcarbonat entsprechend der Summenformel Na₂CO₃ + CaO + H₂O = 2 NaOH + CaCO₃ zu Natronlauge und Calciumcarbonat umzusetzen. Die so umgesetzte Mischung wird über ein Filter geleitet, auf welchem Feststoffe, hauptsächlich Calciumcarbonat, welches auch als Kalkschlamm bezeichnet wird, abgetrennt werden. Die abgetrennten Feststoffe werden mit Wasser oder Filtrat einer nachfolgenden Filterstufe verdünnt, wiederum auf einem Filter abfiltiert, in den Kalkofen überführt und zu gebranntem Kalk umgewandelt. Das hierbei erhaltene Filtrat wird als Weißlauge wieder in den Prozess rückgeführt.

Die Umsetzung von Grünlauge mit Calciumoxid stellt hierbei eine Gleichgewichtsreaktion dar, die in der Praxis üblicherweise nur bis zu einer Umsetzung von 80 bis 85 % des Natriumcarbonats, d.h. bis zu einem Kaustifizierungsgrad von 80 bis 85 % führt. Dieser aus der Sicht einer Verfahrensökonomie niedrige Umsetzungsgrad ist von verschiedenen Faktoren abhängig, wie beispielsweise der Gesamtalkalikonzentration, der Natriumsulfidkonzentration, der Temperatur sowie dem Überschuss an Calciumoxid. Insbesondere die Überschussmenge an Calciumoxid, welche für eine möglichst vollständige Reaktion des Natriumcarbonats in Calciumcarbonat und Natronlauge erforderlich ist, wirkt sich hierbei störend auf das weitere Verfahren aus und zwar insbesondere auf die Filtrierbarkeit des Kalkschlamms sowie auch auf den nachfolgenden Kalkkreislauf, bei welchem Calciumcarbonat wiederum zu Calciumoxid gebrannt wird. Die Überschussmenge an Calciumoxid, welche üblicherweise maximal etwa 5 % beträgt, verlegt hierbei insbesondere während der Filtration Filtertücher und Siebe bzw. verursacht in dem Kalkofen sogenannte Ring- und Kugelbildungen, welche wesentliche Verluste und Prozessstörungen nach sich ziehen.

Ein Verfahren zur Kontrolle der Natriumcarbonatkonzentration in der Grünlauge ist beispielsweise in der EP 0 524 743 B1 beschrieben, in welchem Verfahren basierend auf einer Messung der Leitfähigkeit einer Grünlauge und der Messung der Leitfähigkeit und der Strömungsrate einer Waschlösung die Natriumcarbonatkonzentration der Grünlauge eingestellt bzw. nachgestellt wird.

Der WO 97/22752 A1 ist ein Verfahren zum Filtern von Weißlauge ebenso wie ein Speicherbehälter für Kalkschlamm zu entnehmen. Bei diesem Verfahren wird die chemische Schmelze, die durch Verdampfen und Brennen von Schwarzlauge erhalten wurde, aufgelöst, die während diesem Lösen gebildete Grünlauge kaustifiziert und das erhaltene Calziumcarbonat durch Brennen in Calziumoxid überführt und wiederum zur Kaustifizierung von Grünlauge eingesetzt. In einem derartigen Verfahren werden Feststoffe vor dem Kaustifizieren abfiltriert, welche zu einem Kuchen verpresst werden, welcher direkt in einen Speichersilo überführt wird und nachfolgend in den Kalkofen zum Brennen eingebracht wird.

Der WO 2005/056917 A2 ist ein Verfahren und eine Vorrichtung zum Verbessern des Kaustifizierungsverfahrens zu entnehmen, bei welchem zum Einstellen der Temperatur der Grünlauge vor dem Einmischen von Kalk in die Grünlauge die Temperatur der Schwachlauge, die verwendet wird, um die Grünlauge zu verdünnen, in einem Wärmetauscher eingestellt wird, bevor die Schwachlauge der Grünlauge zugesetzt wird.

Der WO 2012/027223 A1 ist ein Kaustifizierungsprodukt entnehmbar, welches zur Helligkeitsverbesserung über eine Vorablöschen verwendet werden kann. Hierbei wird teilchenförmiges Calciumcarbonat erhalten, welches die Helligkeit und die Farbe verbessert und welches eine gleichmäßige Teilchengrößenverteilung derart aufweist, dass, wenn die Teilchen, die in dem Kaustifizierungsverfahren während des Kraftprozesses hergestellt werden, die Zeit, die erforderlich ist, um die Teilchen von den Laugen zu trennen, in welchen sie suspendiert sind, minimiert wird und die Menge an rückgewonnener Lauge maximiert wird, bei gleichzeitig minimaler Verdünnung mit Wasser.

Die US 4,561,934 beschreibt ein Verfahren zum Rückgewinnen von Chemikalen aus chloridhaltiger Grünlauge durch Vorcarbonatisieren der Grünlauge mittels Abgasen in ein Sulfid und Soda, indem Sulfid von der vorcarbonatisierten Lösung in Form von Schwefelwasserstoff durch Verdampfen und Kristallisieren der chlorid- und sodahaltigen Lösung gewonnen wird, um das Chloridsalz aus der alkalischen Lösung abzutrennen.

Weiterhin ist in der WO 85/01966 ein Verfahren zur Kaustifizierung von Grünlauge beschrieben, bei welchem Kalk in einem zweistufigen Kaustifizierungsverfahren so zugesetzt wird, dass der Kalk, welcher in einer ersten Kaustifizierungsstufe eingesetzt wird, von gegenüber dem Kalk, welcher in der zweiten Kaustifizierungsstufe eingesetzt wird, geringerer Qualität ist und auf diese Weise versucht wird, möglichst viel Natriumcarbonat in Natronlauge überzuführen, welche Lauge nachfolgend im Papierherstellungsverfahren eingesetzt werden kann.

Die vorliegende Erfindung zielt nun darauf ab, ein Verfahren zur Verfügung zu stellen, mit welchem es gelingt die Menge an nicht umgesetztem Calciumoxid im abgetrennten Kalkschlamm nach einer Kaustifizierung möglichst zu verringern, ohne dass das Gesamtverfahren nachteilig beeinflusst wird.

Zur Lösung dieser Aufgabe ist das erfindungsgemäße Verfahren im Wesentlichen dadurch gekennzeichnet, dass der wässrigen Suspension nach einem ersten Abtrennen von Calciumcarbonat als Hauptbestandteil und Calciumoxid als Nebenbestandteil wenigstens während eines Verdünnens in einem Verdünnungsbehälter und in dem (den) Verdünnungsbehälter(n) vor einem zweiten und/oder einem dritten Filter Kohlendioxid zugesetzt wird. Indem Kohlendioxid (CO₂) in die wässrige Suspension enthaltend Calciumcarbonat als Hauptbestandteil sowie Resten von Calciumoxid wenigstens während einer Verweilzeit in dem Verdünnungsbehälter vor dem Filtrieren zugesetzt wird, wird das in Restmengen vorhandene Calciumoxid weitestgehend zu Calciumcarbonat umgesetzt und somit die zuvor beschriebene Gleichgewichtsreaktion in Richtung zu Calciumcarbonat verschoben. Durch das Absenken der Restmenge an Calciumoxid gelingt es vor allem aufgrund der besseren Kristallinität des Calciumcarbonats in Bezug auf jene des Calciumoxids die Filtrierbarkeit des Kalkschlamms wesentlich zu verbessern, so dass ein Verlegen von Filtertüchern bzw. Filtern während des Filtrierens im Wesentlichen hintangehalten wird. Indem gleichzeitig die Restmenge an Calciumoxid durch den Zusatz von Kohlendioxid deutlich herabgesetzt wird, gelingt es weiterhin, nahezu reines Calciumcarbonat in den Kalkkreislauf eines Zellstoffaufschlussverfahrens rückzuführen, so dass auch die nachteiligen Effekte in dem Kalkofen, wie beispielsweise die Ringbildung bzw. die Kugelbildung hintangehalten bzw. deutlich herabgesetzt sind, so dass insgesamt die Verfahrensökonomie deutlich gegenüber herkömmlichen Verfahren verbessert ist.

Indem, wie dies einer Weiterbildung der Erfindung entspricht, eine Zufuhrdauer von Kohlendioxid in die in dem Verdünnungsbehälter enthaltene wässrige Suspension enthaltend Calciumcarbonat als Hauptbestandteil und Calciumoxid als Nebenbestandteil so gewählt wird bis ein pH-Wert der wässrigen Suspension Werte zwischen 8,0 und 13,0, insbesondere 8,5 und 12 erreicht, gelingt es einerseits, Calciumoxid nahezu vollständig zu Calciumcarbonat umzusetzen und andererseits das Verfahren so zu führen, dass es immer noch ausreichend basisch bleibt, damit der sich das Calciumcarbonat nicht unter Bildung von Calciumhydrogencarbonat löst.

Für eine besonders effiziente Entfernung von Calciumoxid und insbesondere, um ein Verlegen der Filter bzw. Filtertücher in den Filtrierstufen mit Sicherheit hintanzuhalten, ist gemäß einer bevorzugten Weiterbildung der Erfindung das Verfahren so geführt, dass der Kohlendioxidzusatz zusätzlich vor einem Verdünnungsbehälter von wenigstens einem aus dem zweiten oder dritten Kalkschlammfilter erfolgt. Indem der Kohlendioxidzusatz bzw. die Kohlendioxidzufuhr zusätzlich vor einem Verdünnungsbehälter von wenigstens einem aus den zweiten und dritten Kalkschlammfilter erfolgt, wird sichergestellt, dass eine ausreichend lange Kohlendioxidzufuhr erfolgt, damit das feine Calciumoxid die Filter nicht verlegen kann, so dass das Verfahren störungsfrei geführt werden kann und insbesondere nahezu ausschließlich Calciumcarbonat in den Kalkofen rückgeführt werden kann.

Um das störende Calciumoxid nahezu vollständig in Calciumcarbonat umzusetzen und um auf diese Weise ein Verlegen der Filter bzw. Filtertücher von sowohl der zweiten als auch der dritten Filterstufe mit Sicherheit hintanzuhalten, wird das erfindungsgemäße Verfahren so geführt, dass die Kohlendioxidzufuhr alternativ in den Verdünnungsbehälter welcher dem zweiten Filter zuordnet ist oder auch bei Vorhandensein eines dritten Filters in den Verdünnungsbehälter welcher dem dritten Filter zugeordnet ist, erfolgt. Eine Dosierung in beide Verdünnungsbehälter ist ebenfalls möglich.

Für eine besonders vollständige Abtrennung des Calciumoxids hat es sich als vorteilhaft erwiesen, dass die Zufuhrdauer von Kohlendioxid mit einer Verweilzeit in dem Verdünnungsbehälter übereinstimmend gewählt wird. Bei einer derartigen Vorgangsweise wird kontinuierlich während der gesamten Verweilzeit in dem Verdünnungsbehälter, welcher entweder der zweiten oder dritten Filterstufe zugeordnet ist oder auch in jene welche beiden, der zweiten und der dritten Filterstufe vorgelagert sind, Kohlendioxid eingebracht, um eine langsame und nahezu quantitative Umwandlung des restlichen Calciumoxids in Calciumcarbonat zu bewirken. Andere Verfahrensführungen, wie eine kurz dauernde Zufuhr von großen Mengen an Kohlendioxid haben sich nicht als vorteilhaft erwiesen.

Eine besonders vollständige Umsetzung von Calciumoxid in Calciumcarbonat wird gemäß der Erfindung dadurch erzielt, dass Kohlendioxid für einen Zeitraum zwischen 5 und 120 Minuten, insbesondere zwischen 5 und 30 Minuten zugesetzt wird. Indem Kohlendioxid über einen längeren Zeitraum, insbesondere zwischen 5 und 120 Minuten in wenigstens einen einer Filterstufe zugeordneten und vor dieser angeordneten Verdünnungsbehälter eingeblasen wird, wird eine nahezu quantitative Umsetzung des Calciumoxids in Calciumcarbonat gewährleistet, ohne gleichzeitig den pH-Wert der Suspension zu weit abzusenken und somit Calciumcarbonat unter Bildung von Calciumhydrogencarbonat aufzulösen.

Um einen möglichst innigen Kontakt des Kohlendioxids mit dem im Verdünnungsbehälter enthaltenen Calciumoxid zu gewährleisten und um die Verweilzeit des Kohlendioxids in dem Verdünnungsbehälter zu maximieren, ist das Verfahren dahingehend weitergebildet, dass Kohlendioxid in den Verdünnungsbehälter über einen Behälterboden des Verdünnungsbehälters eingebracht wird. Mit einer derartigen Verfahrensführung und insbesondere wenn Kohlendioxid in den vor einer Filterstufe angeordneten Verdünnungsbehälter über dem Behälterboden fein verteilt zugeführt wird, wird ein inniger Kontakt und gleichzeitig eine Durchmischung des Inhalts des Verdünnungsbehälters bei gleichzeitiger Maximierung der Verweilzeit von Kohlendioxid sichergestellt, so dass die Reaktion von Calciumoxid zu Calciumcarbonat weiter vervollständigt werden kann.

Für eine besonders gleichmäßige Verteilung des Kohlendioxids in dem Verdünnungsbehälter vor dem Filter ist das erfindungsgemäße Verfahren so geführt, dass Kohlendioxid in die wässrige Suspension über eine oder mehrere von Einbringöffnung(en) fein verteilt eingetragen wird. Eine oder eine Mehrzahl von Einbringöffnung(en) stellt sicher, dass die gesamte Suspension mit Kohlendioxid innig in Kontakt gelangt und gleichzeitig die Verweilzeit des Kohlendioxids ausreichend ist, um die Reaktion von Calciumoxid zu Calciumcarbonat möglichst vollständig zu führen. Hierzu kann beispielsweise, wie dies einer Weiterbildung der Erfindung entspricht, das Kohlendioxid über einen Sparger in die Leitung zum Verdünnungsbehälter oder andere eine Mehrzahl von Durchtrittsöffnungen aufweisende Einbringvorrichtungen über den Behälterboden eingebracht werden und insbesondere kann dafür Sorge getragen werden, dass eine möglichst gute Durchmischung der in dem Verdünnungsbehälter enthaltenen Suspension mit Kohlendioxid erfolgt und somit die Reaktion von Calciumoxid zu Calciumcarbonat möglichst vervollständigt wird.

Um ein besonders günstiges Verhältnis zwischen bewirkter Absenkung des pH-Werts durch die Kohlendioxidzugabe und der Vervollständigung der Calciumoxidumsetzung zu erzielen ist bevorzugt das Verfahren gemäß der Erfindung so weitergebildet, dass eine Gesamtmenge von 0,1 bis 5 Gew.-%, vorzugsweise 0,4 bis 2,5 Gew.-% trockenes Kohlendioxid/kg trockener Kalkschlamm zugesetzt wird. Mit einer derartigen Zugabemenge wird ein optimaler Kompromiss gefunden, welcher eine nahezu vollständige Umsetzung von Calciumoxid in Calciumcarbonat ermöglicht, ohne gleichzeitig den pH-Wert so weit abzusenken, dass sich der Kalkschlamm unter Bildung von Calciumhydrogencarbonat löst.

Gemäß einer Weiterbildung der Erfindung wird das Verfahren so geführt wird, dass der Zusatz von Kohlendioxid bei einer Temperatur zwischen 40 °C und 105 °C, insbesondere 65 °C bis 100 °C erfolgt. Eine derartige Temperaturwahl ist insbesondere aufgrund der Energiebilanz des Gesamtverfahrens bzw. der Verfahrenökonomie bevorzugt, da die Grünlauge nach Aufnahme bzw. Suspendierung der Rückstände aus der Laugenverbrennung in etwa eine Temperatur zwischen 60 und 105 °C aufweist, so dass in günstiger Weise weder ein Kühlen noch ein Erhitzen vor dem Filter vorgenommen wird und die gebildete Weißlauge nachfolgend in den Kocher, in welchem erhöhte Temperaturen vorherrschen, möglichst ohne vorherige Absenkung der Temperatur eingespeist wird, um Energieverluste zu vermeiden. Es wird daher das Durchleiten von Kohlendioxid am günstigsten bei der vorherrschenden Temperatur der Grünlauge durchgeführt werden.

Als Kohlendioxid kann in dem erfindungsgemäßen Verfahren reines Kohlendioxid, mit Luft verdünntes Kohlendioxid oder Kohlendioxid aus Rauchgas eingesetzt werden. Bei Einsatz von reinem Kohlendioxid bzw. mit Luft verdünntem Kohlendioxid gelingt eine besonders ökonomische Verfahrensführung, da die einzusetzende Menge an Kohlendioxid vorab quantitativ bestimmt bzw. berechnet werden kann, so dass die Zugabe einer Überschussmenge mit Sicherheit hintangehalten werden kann. Bei Verwendung von Kohlendioxid aus Rauchgas wird ein Abfallprodukt wiederverwertet, so dass die Gesamtenergiebilanz des Verfahrens durch Verwendung des Abfallprodukts deutlich verbessert wird.

Gemäß einer Weiterbildung des erfindungsgemäßen Verfahrens wird das Verfahren so geführt, dass Rauchgas aus einem Kalkofen als Kohlendioxidquelle eingesetzt wird. In der Zellstoffherstellung ist neben dem Aufschlussverfahren von Holzspänen bzw. Hackgut zu Zellstoff auch ein sogenannter Alkalikreislauf angeschlossen, mit welchem die Ablauge aus der Wäsche in dem Zelluloseaufschlussverfahren im Kreislauf geführt wird und wieder verwertbare Produkte, insbesondere Natronlauge und Natriumsulfid so aufbereitet werden, um wiederum in einen Kocher eingespeist werden zu können, und andererseits ein sogenannter Kalkkreislauf angeschlossen, bei welchem bei der Kaustifizierung von Grünlauge gebildetes Calciumcarbonat in einem Kalkofen wiederum zu gebranntem Kalk bzw. Calciumoxid umgewandelt wird, um in der Folge wiederum in der Kaustifizierung eingesetzt zu werden. Rauchgas aus dem Kalkofen ist daher eine direkt aus dem Gesamtverfahren resultierende Kohlendioxidquelle, welche keinerlei Fremdzusatz an Kohlendioxid erfordert, sondern es wird im Prozess befindliches Kohlendioxid im Kreislauf geführt, weshalb mit einer derartigen Verfahrensführung eine besonders hohe Verfahrensökonomie erreicht werden kann.

Die Erfindung wird nachfolgend anhand von Zeichnungen und Ausführungsbeispielen näher erläutert, in diesen zeigt:
Fig. 1 ein schematisches Fließschema des Zellstoffaufschlusses sowie des zugehörigen Alkalikreislaufs, Kalkkreislaufs und Kohlendioxidkreislaufs gemäß der Erfindung, und
Fig. 2 ein schematisches Fließschema des Verfahrensablaufs gemäß der Erfindung, in welchem lediglich ein Teil des Alkalikreislaufs, des Kalkkreislaufs oder CO₂-Kreislaufs dargestellt ist.

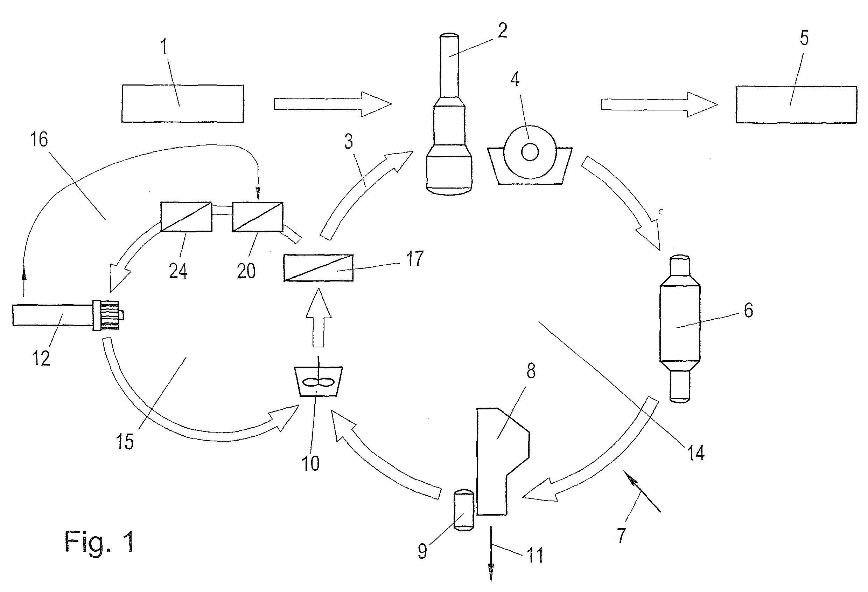

Im Einzelnen ist in Fig. 1 mit 1 schematisch Holzhackgut dargestellt, welches in den Kocher 2 eingebracht wird. In den Kocher 2 wird zusätzlich zu dem Hackgut 1 auch Weißlauge eingespeist, wobei der Einspeisungsweg, der vor allem aus Natriumhydroxid und Natriumsulfid bestehenden Weißlauge schematisch mit 3 dargestellt ist. Nach Durchführung des nicht Teil der Erfindung bildenden Aufschlussprozesses im Kocher 2 werden die aufgeschlossenen Holzschnitzel bzw. das Hackgut 1 in einen Wäscher 4 eingebracht und der gereinigte Zellstoff, welcher aus dem Wäscher 4 ausgetragen wird, wird in eine schematisch mit 5 bezeichnete Papierfabrik bzw. einen weiteren Zellstoff verarbeitenden Betrieb überführt bzw. eingetragen.

Die verbrauchte Waschlauge aus dem Wäscher 4, die sogenannte Dünnlauge bzw. Schwarzlauge wird in eine Eindampfanlage 6 eingebracht, in welcher die im Wesentlichen aus Natriumsulfid-Lignin-Verbindungen und Wasser bestehende Dünnlauge eingedickt wird. Nach einem Eindampfen bzw. Eindicken in der Eindampfanlage 6 wird die in dieser Eindampfanlage hergestellte Dicklauge, welche im Vergleich zur Dünnlauge in erster Linie einen verringerten Wassergehalt aufweist, mit Natriumsulfat versetzt, wie dies schematisch durch den Pfeil 7 dargestellt ist, und in eine Laugenverbrennung 8 eingebracht.

Aus der Laugenverbrennung 8 wird eine Schmelze erhalten, welche in dem Kessel 9 aufgelöst wird und eine Grünlauge, welche im Wesentlichen aus Natriumcarbonat und Natriumsulfid sowie Wasser besteht, wird einer Kaustifizierung 10 zugeführt. In der Laugenverbrennung 8 wird, wie dies schematisch mit dem Pfeil 11 angedeutet ist, neben der Ausbildung von Schmelze, insbesondere Energie, nämlich Dampf bzw. elektrischer Strom generiert, welche, wie dies schematisch angedeutet ist, aus der Laugenverbrennung 8 ausgetragen wird und dem Verfahren rückgeführt bzw. im Verfahren wieder eingesetzt werden kann.

Bei der Kaustifizierung 10 wird die Grünlauge mit gebranntem Kalk, welcher aus einem Kalkofen 12 stammt, versetzt, um in der sogenannten Kaustifizierungsreaktion das aus der Grünlauge stammende Natriumcarbonat in Calciumcarbonat und Natronlauge umzusetzen, welche Natronlauge in der Folge in dem Kocher 2 wiederum für den Aufschluss von Hackgut bzw. Hackschnitzeln verwendet werden kann.

Bei der Kaustifizierung in der Kaustifizierung 10 wird eine Mischung, welche im Wesentlichen aus Natriumhydroxid, Natriumsulfid und Calciumcarbonat besteht, erhalten, wobei in dieser Mischung auch nicht umgesetztes Calciumoxid enthalten ist, da die Umsetzungsreaktion von Natriumcarbonat mit Calciumoxid und Wasser eine Gleichgewichtsreaktion ist, so dass immer nicht umgesetztes Calciumoxid in dem Produkt mit enthalten ist. Zur Abtrennung von festen Materialien, nämlich insbesondere von Calciumcarbonat und Calciumoxid wird das Produkt der Kaustifizierung 10 in der Folge über eine erste Filtereinheit 17 geleitet und Feststoffe abgetrennt und flüssige Stoffe wiederum in den Kocher 2 rückgeführt. Die abgetrennten Feststoffe, insbesondere Calciumcarbonat sowie gegebenenfalls verbleibendes Calciumoxid werden in der Folge in den Kalkofen 12 über eine zweite und dritte Filterstufe 20 und 24 rückgeführt, um in dem Kalkofen 12 zu Calciumoxid gebrannt zu werden, welches in der Folge wiederum der Kaustifizierung 10 zugeführt werden kann.

Hierbei werden sowohl Alkalien als auch Kalk im Kreislauf geführt, wobei die Kreisläufe in der Fig. 1 schematisch mit 15 für den Kalkkreislauf und 14 für den Alkalikreislauf dargestellt sind. Gemäß der Erfindung hat es sich nunmehr als vorteilhaft erwiesen, dass zusätzlich zu dem Kalkkreislauf 15 und dem Alkalikreislauf 14 ein weiterer Bestandteil, nämlich das Kohlendioxid im Kreislauf geführt wird, wobei der Kohlendioxidkreislauf schematisch mit 16 dargestellt ist. In diesem Kohlendioxidkreislauf 16 wird im Zuge des Brennens von Kalk aus dem Calciumcarbonat freigesetztes Kohlendioxid wenigstens zum Teil in das Filter bzw. in die zweite Filterstufe 20 rückgeführt, um die Reaktion von Natriumcarbonat mit Calciumoxid weiter in Richtung zu Calciumcarbonat und Natronlauge zu verschieben.

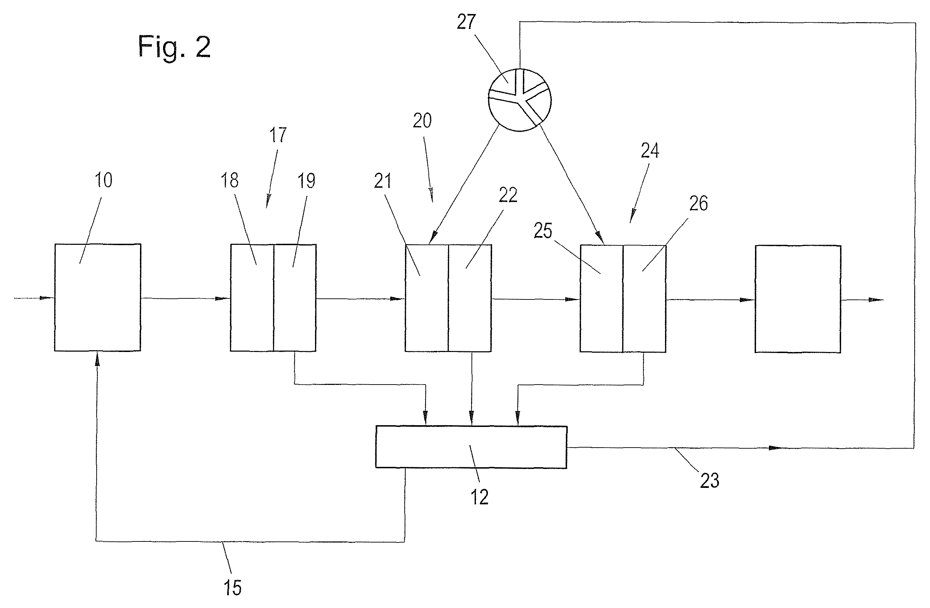

In Fig. 2 ist hierbei das Detail der Filtration nach der Kaustifizierung 10 sowie die Rückführung von Kohlendioxid gemäß der Erfindung in die Filterstufen 20 bzw. 24 in größerem Detail dargestellt.

In dieser Figur wird das aus der Kaustifizierung 10 abgezogene Material einer ersten Filterstufe 17, welche aus einem Verdünnungsbehälter 18 und einem nachgeschalteten Filter 19 besteht, zugeführt. Nach einer Verdünnung im Verdünnungsbehälter 18, insbesondere mit Wasser, wird in der zweiten Filterstufe 20, der gewaschene Kalkschlamm abgezogen. In manchen Werken gibt es noch eine dritte Filterstufe um den Kalkschlamm noch besser von Laugenresten auszuwaschen.

Um ein Verlegen des zweiten Filters 22 oder des dritten Filters 26 mit feinkörnigem Calciumoxid mit Sicherheit hintanzuhalten und insbesondere um nicht übermäßige Mengen an Calciumoxid, welche in dem nachgeschalteten Kalkofen 12 störend wären, abzuziehen, ist das Verfahren hierbei so geführt, dass in den Verdünnungsbehälter 21 oder gegebenenfalls auch 25 Kohlendioxid eingeblasen wird. Das Einblasen des Kohlendioxids, welches über eine Rückführungsleitung 23 aus dem Kalkofen 12 stammt, wird hierbei in der Praxis so vorgenommen, dass eine möglichst lange Verweilzeit des Kohlendioxids in dem Verdünnungsbehälter 21 oder auch gegebenenfalls 25 sichergestellt wird. Hierzu kann das Kohlendioxid beispielsweise über einen oder mehrere Sparger in die Zuführleitung zum Filter 20 oder von unten in den Verdünnungsbehälter 21 oder eine vergleichbare Anordnung eingebracht werden.

Das Einbringen des Kohlendioxids in den Verdünnungsbehälter 21 wird hierbei insbesondere so lange fortgesetzt, bis der pH-Wert der Suspension auf einen Wert von 8,5-12 abgesenkt wurde.

Bei derartigen pH-Werten wird der größte Teil des Calciumoxids in der Suspension zu Calciumcarbonat umgesetzt, so dass ein Verlegen des Filters 26 mit Sicherheit hintangehalten ist. Das im Filter 22 abgetrennte Calciumcarbonat wird wiederum dem Kalkofen 12 zugeführt und nach einem Brennen zu Calciumoxid über den Kalkkreislauf 15 der Kaustifizierung 10 rückgeführt.

Um insbesondere eine Möglichkeit der Steuerung der Zufuhr von Kohlendioxid zu den Verdünnungsbehältern 21 und/oder 25 zu ermöglichen, ist in die Rückführungsleitung 23 ein 3 Wegeventil 27 eingesetzt, welches eine Umschaltung der Kohlendioxidzufuhr zwischen den Verdünnungsbehältern 21 und 25 ermöglicht. Es erübrigt sich in diesem Zusammenhang festzuhalten, dass selbstverständlich auf die gleichzeitige Zufuhr von Kohlendioxid in die Verdünnungsbehälter 21 und 25 ermöglicht ist.

### Beispiel 1:

Laborversuch zur Aufbereitung einer industriellen Grünlauge bei unterschiedlichen Verweilzeiten, Temperaturen und unterschiedlichen Mengen an Kohlendioxidzusatz

### Beispiel 2:

Laborversuch mit einer industriellen Grünlauge, bei welchem bei gleichbleibender Rührzeit und Temperatur unterschiedliche Mengen an Kohlendioxid zugesetzt werden.

### Beispiel 1:

1 einer industriellen Grünlauge mit einem Gasamtalkaligehalt von 165 g/l (als NaOH gerechnet) und einer Sulfidität von 35 % wurden auf 80° C erhitzt und mit 74 g industriell gebranntem Kalk (90 % CaO) versetzt. Die Mischung wurde unter Thermostatisierung auf 101 °C 2 h gerührt und anschließend unter Verwendung eines Glasfaserfilters auf einer Nutsche im Wasserstrahlvakuum abgesaugt.

Der Rückstand auf dem Filter, ein Kalkschaum wurde mit Wasser von 70 °C gerührt, am Boden über eine Glasfritte mit CO₂ begast und anschließend wieder, wie oben beschrieben, abgesaugt. Anschließend wurde der Trockengehalt des Kalkschaums gravimetrisch festgestellt.

Der Versuch wurde insgesamt 7 Mal ausgeführt, wobei die Parameter, Rührzeit, Temperatur und Kohlendioxidzusatz variiert wurden und als Ergebnis sowohl der Trockengehalt des Kalkschaums als auch der pH-Wert des Filtrats bestimmt wurde. Die Ergebnisse sind in Tabelle 1 gezeigt.

**Tabelle 1:**

| Versuch | Rührzeit Min | Temperatur °C | Begasung g CO₂ | Trockengehalt % | pH-Wert |
|---|---|---|---|---|---|
| 1A | 5 | 70 | 0 | 73 | 13,0 |
| 1B | 5 | 70 | 0,4 | 77 | 11,5 |
| 1C | 5 | 70 | 0,8 | 80 | 9, 5 |
| 1D | 30 | 70 | 0 | 74 | 12,9 |
| 1E | 30 | 70 | 0,4 | 79 | 11,3 |
| 1F | 5 | 90 | 0 | 75 | 13,0 |
| 1J | 5 | 90 | 0,4 | 78 | 11,4 |

Aus Tabelle 1 ist ersichtlich, dass die Temperatur und Verweilzeit einen eher geringen Einfluss auf die Menge an abgezogenem Kalkschlamm im Vergleich zu dem Einsatz von Kohlendioxid zweigen. So wurde bei einer Rührzeit von 5 Minuten und einer Temperatur von 70 °C ohne Zusatz von Kohlendioxid ein Trockengehalt von 73 % ermittelt, bei einer Rührzeit von 30 Minuten, einer Temperatur von 70 °C und keinem Zusatz von Kohlendioxid ein Trockengehalt von 74 % und bei einer Rührzeit von 5 min, einer Temperatur von 90 °C und ohne Zusatz von Kohlendioxid ein Trockengehalt von 75 %. Wenn jedoch eine Begasung mit 0,4 bzw. 0,8 g Kohlendioxid durchgeführt wird, kann der Trockengehalt an Kalkschlamm auf 77 bis 80 % gesteigert werden, ohne dass der pH-Wert des Filtrats, der Weißlauge soweit absinken würde, dass die Weißlauge für ein nachfolgenden Einsatz im Kocher ungeeignet wäre, was in etwa bei pH-Werten unter 8,5 der Fall wäre.

### Beispiel 2:

1 l einer industriellen Grünlauge mit einem Gesamtalkaligehalt von 165 g/l (als NaOH gerechnet) und einer Sulfidität von 35 % wurden auf 80° C erhitzt und mit 78 g industriell gebranntem Kalk (90 % CaO) versetzt. Die Mischung wurde unter Thermostatisierung auf 101 °C 2 h gerührt und anschließend unter Verwendung eines Glasfaserfilters auf einer Nutsche im Wasserstrahlvakuum abgesaugt.

Der Rückstand auf dem Filter, ein Kalkschlamm wurde mit Wasser von 70 °C gerührt, am Boden über eine Glasfritte mit CO₂ begast und anschließend wieder wie oben abgesaugt. Anschließend wurde der Trockengehalt des Kalkschlamms gravimetrisch festgestellt.

Der Versuch wurde insgesamt 6 Mal ausgeführt, wobei nur der Kohlendioxidzusatz variiert wurde und als Ergebnis wurde sowohl der Trockengehalt des Kalkschaums als auch der pH-Wert des Filtrats bestimmt. Die Ergebnisse sind in Tabelle 2 gezeigt.

**Tabelle 2:**

| Versuch | Rührzeit Min | Temperatur °C | Begasung g CO₂ | Trockengehalt % | pH-Wert |
|---|---|---|---|---|---|
| 2A | 5 | 70 | 0 | 65 | 13,4 |
| 2B | 5 | 70 | 0, 4 | 68 | 13,0 |
| 2C | 5 | 70 | 0,8 | 70 | 12,5 |
| 2D | 5 | 70 | 1,2 | 74 | 11,9 |
| 2E | 5 | 70 | 1,6 | 79 | 10,7 |
| 2F | 5 | 70 | 2,0 | 81 | 9,3 |

Aus diesem Versuch ergibt sich, dass bei einer kontinuierlich ansteigenden Menge des Kohlendioxideinsatzes auch kontinuierlich der Trockengehalt des Kalkschlamms ansteigt, ohne dass der pH-Wert des Filtrats, der Weißlauge soweit absinken würde, dass die Weißlauge für ein nachfolgenden Einsatz im Kocher ungeeignet wäre.

## Patentansprüche

1. Verfahren zur Kaustifizierung von Grünlauge in einem Sulfat- oder Kraftprozess zur Zellstoffherstellung, bei welchem eine aus einer wässrigen Lösung von Natriumcarbonat als Hauptbestandteil und Natriumsulfid bestehende Grünlauge in einem Slaker mit Calciumoxid versetzt wird und einer Umsetzung in einem Kaustifizierer (10) zu einer wässrigen Suspension enthaltend Natriumhydroxid und Calciumcarbonat als Hauptbestandteile unterworfen wird, welche Suspension auf einem ersten Filter (19) abfiltriert wird und anschließend zwei bis drei Mal nach Verdünnung mit Wasser in einem Verdünnungsbehälter (21, 25) zur Abtrennung von darin suspendierten Feststoffen über weitere Filter (22, 26) geleitet und filtriert wird, **dadurch gekennzeichnet, dass** der wässrigen Suspension nach einem ersten Abtrennen von Calciumcarbonat als Hauptbestandteil und Calciumoxid als Nebenbestandteil wenigstens während eines Verdünnens in einem Verdünnungsbehälter (18, 21, 25) und in dem (den) Verdünnungsbehälter(n) (21, 25) vor einem zweiten und/oder einem dritten Filter (22, 26) Kohlendioxid zugesetzt wird.

2. Verfahren nach Anspruch 1, **dadurch gekennzeichnet, dass** eine Zufuhrdauer von Kohlendioxid in die in dem Verdünnungsbehälter (21, 25) enthaltene die wässrige Suspension enthaltend Calciumcarbonat als Hauptbestandteil oder Calciumoxid als Nebenbestandteil so gewählt wird bis ein pH-Wert der wässrigen Suspension Werte zwischen 8,0 und 13,0, insbesondere 8,5 und 12 erreicht.

3. Verfahren nach einem der Ansprüche 1 oder 2, **dadurch gekennzeichnet, dass** der Kohlendioxidzusatz zusätzlich vor wenigstens einem Verdünnungsbehälter (21, 25) von einem aus dem zweiten oder dritten Kalkschlammfilter (22, 26) erfolgt.

4. Verfahren nach einem der Ansprüche 1, 2 oder 3, **dadurch gekennzeichnet, dass** die Kohlendioxidzufuhr sowohl in den Verdünnungsbehälter (21) welcher dem zweiten Filter (22) zugeordnet ist als auch gegebenenfalls den Verdünnungsbehälter (25) welcher dem dritten Filter (26) zugeordnet ist, erfolgt.

5. Verfahren nach einem der Ansprüche 1 bis 4, **dadurch gekennzeichnet, dass** die Zufuhrdauer von Kohlendioxidzusatz mit einer Verweilzeit in dem Verdünnungsbehälter (21, 25) übereinstimmend gewählt wird.

6. Verfahren nach einem der Ansprüche 1 bis 5, **dadurch gekennzeichnet, dass** Kohlendioxid für einen Zeitraum zwischen 5 und 120 min, insbesondere zwischen 5 und 30 min zugesetzt wird.

7. Verfahren nach einem der Ansprüche 1 bis 6, **dadurch gekennzeichnet, dass** Kohlendioxid in den Verdünnungsbehälter (21, 25) über einen Behälterboden des Verdünnungsbehälters eingebracht wird.

8. Verfahren nach Anspruch 7, **dadurch gekennzeichnet, dass** Kohlendioxid in die wässrige Suspension über eine oder mehrere Einbringöffnung(en) fein verteilt eingetragen wird.

9. Verfahren nach einem der Ansprüche 1 bis 8, **dadurch gekennzeichnet, dass** Kohlendioxid in die Leitung zu einem der Verdünnungsbehälter fein verteilt, insbesondere mittels eines Spargers eingebracht wird.

10. Verfahren nach Anspruch einem der Ansprüche 1 bis 9, **dadurch gekennzeichnet, dass** eine Gesamtmenge von 0,1 bis 5 Gew.-%, vorzugsweise 0,4 bis 2,5 Gew.-% trockenes Kohlendioxid/kg trockener Kalkschlamm zugesetzt wird.

11. Verfahren nach einem der Ansprüche 1 bis 10, **dadurch gekennzeichnet, dass** der Zusatz von Kohlendioxid bei einer Temperatur zwischen 40 °C und 105 °C, insbesondere 65 °C bis 100 °C erfolgt.

12. Verfahren nach einem der Ansprüche 1 bis 11, **dadurch gekennzeichnet, dass** das eingesetzte Kohlendioxid aus reinem Kohlendioxid, mit Luft verdünntem Kohlendioxid oder Rauchgas gewählt wird.

13. Verfahren nach Anspruch 12, **dadurch gekennzeichnet, dass** Rauchgas aus einem Kalkofen (12) als Kohlendioxid-Quelle eingesetzt wird.

## Claims

1. A process for recausticizing green liquor in a sulphate or Kraft process for wood pulp production, in which a green liquor consisting of an aqueous solution of sodium carbonate as the major component and sodium sulphide is admixed with calcium oxide in a slaker and undergoes a reaction in a recausticizer (10) to form an aqueous suspension containing sodium hydroxide and calcium carbonate as the major components, which suspension is filtered on a first filter (19) and subsequently, after dilution with water in a dilution vessel (21, 25), is fed over further filters (22, 26) two or three times and filtered to separate solids suspended therein, **characterized in that** after a first separation of calcium carbonate as the major component and calcium oxide as the minor component, carbon dioxide is added to the aqueous suspension at least during dilution in a dilution vessel (18, 21, 25) and in particular in the dilution vessel(s) (21, 25) upstream of a second and/or a third filter (22, 26).

2. The process as claimed in claim 1, **characterized in that** a period for supplying carbon dioxide to the aqueous suspension containing calcium carbonate as the major component or calcium oxide as the minor component contained in the dilution vessel (21, 25) is selected such that a pH of the aqueous suspension in the range 8.0 to 13.0, in particular 8.5 to 12, is obtained.

3. The process as claimed in claim 1 or claim 2, **characterized in that** the carbon dioxide addition is additionally carried out upstream of at least one dilution vessel (21, 25) of at least one of the second or third lime mud filters (22, 26).

4. The process as claimed in one of claims 1, 2 or 3, **characterized in that** the carbon dioxide is fed both to the dilution vessel (21) which is associated with the second filter (22) and also, if appropriate, to the dilution vessel (25) which is associated with the third filter (26).

5. The process as claimed in one of claims 1 to 4, **characterized in that** the period for supplying carbon dioxide is selected so as to coincide with a dwell time in the dilution vessel (21, 25).

6. The process as claimed in one of claims 1 to 5, **characterized in that** carbon dioxide is added for a period of between 5 and 120 minutes, in particular between 5 and 30 minutes.

7. The process as claimed in one of claims 1 to 6, **characterized in that** carbon dioxide is introduced into the dilution vessel (21, 25) via a vessel floor of the dilution vessel.

8. The process as claimed in claim 7, **characterized in that** carbon dioxide is introduced into the aqueous suspension in a finely divided manner via one or more inlet opening(s).

9. The process as claimed in one of claims 1 to 8, **characterized in that** carbon dioxide is introduced into the line leading to one of the dilution vessels in a finely divided manner, in particular by means of a sparger.

10. The process as claimed in one of claims 1 to 9, **characterized in that** a total quantity of 0.1% to 5% by weight, preferably 0.4% to 2.5% by weight of dry carbon dioxide/kg of dry lime mud is added.

11. The process as claimed in one of claims 1 to 10, **characterized in that** the carbon dioxide is added at a temperature between 40°C and 105°C, in particular 65°C to 100°C.

12. The process as claimed in one of claims 1 to 11, **characterized in that** the carbon dioxide employed is selected from pure carbon dioxide, carbon dioxide diluted with air, and flue gas.

13. The process as claimed in claim 12, **characterized in that** flue gas from a lime kiln (12) is used as the source of carbon dioxide.

## Revendications

1. Procédé de caustification de liqueur verte dans un processus au sulfate ou un processus kraft pour la fabrication de cellulose, dans lequel une liqueur verte constituée d'une solution aqueuse de carbonate de sodium comme constituant principal et de sulfure de sodium est mélangée à de l'oxyde de calcium dans un bac extincteur et est soumise dans un caustificateur (10) à une transformation en une suspension aqueuse contenant de l'hydroxyde de sodium et du carbonate de calcium comme constituants principaux, laquelle suspension est filtrée sur un premier filtre (19) et est ensuite conduite à travers d'autres filtres (22, 26) et est filtrée deux à trois fois après dilution avec de l'eau dans un contenant de dilution (21, 25) afin de séparer des matières solides en suspension, **caractérisé en ce qu'**est ajouté, à la suspension aqueuse, du dioxyde de carbone après une première séparation du carbonate de calcium comme constituant principal et de l'oxyde de calcium comme constituant secondaire au moins au cours d'une dilution dans un contenant de dilution (18, 21, 25) et dans le ou les contenants de dilution (21, 25) en amont d'un deuxième et/ou d'un troisième filtre (22, 26).

2. Procédé selon la revendication 1, **caractérisé en ce qu'**une durée d'apport de dioxyde de carbone dans la suspension aqueuse, contenue dans le contenant de dilution (21, 25), contenant du carbonate de calcium comme constituant principal ou du dioxyde de calcium comme constituant secondaire est choisie de telle manière jusqu'à ce que la suspension aqueuse atteigne une valeur pH comprise entre 8,0 et 13,0, en particulier entre 8,5 et 12.

3. Procédé selon l'une quelconque des revendications 1 ou 2, **caractérisé en ce que** l'ajout de dioxyde de carbone est effectué par un filtre parmi le deuxième ou le troisième filtre de boue de chaux (22, 26) en supplément en amont au moins d'un contenant de dilution (21, 25).

4. Procédé selon l'une quelconque des revendications 1, 2 ou 3, **caractérisé en ce que** l'apport en dioxyde de carbone est effectué aussi bien dans le contenant de dilution (21), qui est associé au deuxième filtre (22), que, le cas échéant, également dans le contenant de dilution (25), qui est associé au troisième filtre (26).

5. Procédé selon l'une quelconque des revendications 1 à 4, **caractérisé en ce que** la durée d'apport d'ajout de dioxyde de carbone est choisie de manière à coïncider avec une durée de séjour dans le contenant de dilution (21, 25).

6. Procédé selon l'une quelconque des revendications 1 à 5, **caractérisé en ce que** le dioxyde de carbone est ajouté pendant une durée comprise entre 5 et 120 minutes, en particulier entre 5 et 30 minutes.

7. Procédé selon l'une quelconque des revendications 1 à 6, **caractérisé en ce que** le dioxyde de carbone est introduit dans le contenant de dilution (21, 25) par l'intermédiaire d'un fond de contenant du contenant de dilution.

8. Procédé selon la revendication 7, **caractérisé en ce que** du dioxyde de carbone est amené avec une répartition précise dans la suspension aqueuse par l'intermédiaire d'un ou de plusieurs orifices d'introduction.

9. Procédé selon l'une quelconque des revendications 1 à 8, **caractérisé en ce que** du dioxyde de carbone est introduit dans le conduit menant à l'un des contenants de dilution avec une répartition précise, en particulier au moyen d'un pulvérisateur.

10. Procédé selon l'une quelconque des revendications 1 à 9, **caractérisé en ce qu'**une quantité totale allant de 0,1 à 5 % en poids, de préférence allant de 0,4 à 2,5 % en poids de dioxyde de carbone sec/kg est ajoutée à la boue de chaux sèche.

11. Procédé selon l'une quelconque des revendications 1 à 10, **caractérisé en ce que** l'ajout de dioxyde de carbone est effectué à une température comprise entre 40 °C et 105 °C, en particulier entre 65 °C et 100 °C.

12. Procédé selon l'une quelconque des revendications 1 à 11, **caractérisé en ce que** le dioxyde de carbone utilisé est choisi parmi un dioxyde de carbone pur, un dioxyde de carbone dilué avec de l'air ou des gaz de fumée.

13. Procédé selon la revendication 12, **caractérisé en ce que** des gaz de fumée provenant d'un four à chaux (12) sont utilisés en tant que source de dioxyde de carbone.
